# EUROPÄISCHE PATENTSCHRIFT

(11) **EP 2 432 103 B1**
(45) Veröffentlichungstag und Bekanntmachung des Hinweises auf die Patenterteilung: **30.03.2016**
(21) Anmeldenummer: 11179356.8
(22) Anmeldetag: 30.08.2011
(51) Int. Cl.: H02K 29/08, H02K 11/00

(54) **Elektronisch kommutierter Elektromotor mit einem Rotorpositionssensor**
Electronically commutated electric motor with a rotor position sensor
Moteur électrique à commutation électronique avec un capteur de position du rotor

(30) Priorität: 16.09.2010 DE 102010040861
(43) Veröffentlichungstag der Anmeldung: 21.03.2012
(73) Patentinhaber: Robert Bosch GmbH, 70442 Stuttgart (DE)
(72) Erfinder: Chabaud, Antoine, 71732 Tamm (DE); Kurfiss, Jochen, 75417 Lomersheim (DE)

(56) Entgegenhaltungen:
- DE-A1-102006 032 144
- DE-A1-102008 060 262
- FR-A1- 2 894 092
- JP-A- 7 015 899
- JP-U- 60 153 673

## Beschreibung

### Stand der Technik

Die Erfindung betrifft einen elektronisch kommutierten Elektromotor. Der elektronisch kommutierte Elektromotor weist einen Stator und einen insbesondere permanentmagnetisch ausgebildeten Rotor auf. Der Elektromotor weist auch einen Rotorpositionssensor auf, welcher ausgebildet ist, wenigstens eine Rotorposition des Rotors zu erfassen und ein die Rotorposition repräsentierendes Rotorpositionssignal zu erzeugen. Der Elektromotor weist auch eine mit dem Stator verbundene Steuereinheit auf, welche ausgebildet ist, den Stator zum Erzeugen eines magnetischen Drehfeldes in Abhängigkeit des Rotorpositionssignals zu bestromen.

Bei aus dem Stand der Technik bekannten Elektromotoren mit einem Rotorpositionssensor muss ein permanentmagnetisch ausgebildeter Gebermagnet mit dem Rotor verbunden werden. Dazu wird der Gebermagnet mit einer mit dem Rotor verbundenen Motorwelle verbunden. Bei einem Fertigen des Elektromotors geschieht das beispielsweise durch Aufpressen des Gebermagneten auf die Motorwelle. Dadurch kann sich ein Offset, nämlich eine Winkeldifferenz zwischen einem Magnetpol eines Magnetpolpaares des Gebermagnets und einem gleichnamigen Magnetpol eines Magnetpolpaares des Rotors entlang einer Rotorumlaufrichtung des Rotors, entlang eines Rotorumlaufes zwischen dem Magnetfeld des Gebermagneten und einem Magnetfeld des Rotors ergeben, der sich zufällig aus der Stellung des Gebermagneten in Bezug auf den Rotorumlauf während des Aufpressens ergibt. Der Offset wird bei einem Kalibrieren der Steuereinheit des Elektromotors erfasst und abgespeichert, so dass der Offset beim späteren Bestromen des Stators bei einer Rotorpositionserfassung durch die Steuereinheit berücksichtigt werden kann.

Aus der DE 10 2008 060262 A1 ist ein Elekrtomotor bekannt, bei dem ein Rotorpositionsmagnet in einem mit der Rotorwelle drehfest verbundenen Abschirmbecher angeordnet ist, wobei wobei eine Zahl der Magnetpole des Gebermagnets einen ganzzahligen Anteil einer Zahl von Rotormagnetpolen des Rotors bildet.

### Offenbarung der Erfindung

Erfindungsgemäß weist der Elektromotor einen Gebermagnet für den Rotorpositionssensor auf, wobei der Gebermagnet mit dem Rotor, insbesondere mit einer Motorwelle des Elektromotors, gemäß Anspruch 1 drehverbunden ist. Bevorzugt ist der Gebermagnet mit der Motorwelle drehfest verbunden.

Der Gebermagnet ist erfindungsgemäß als mehrpoliger Permanentmagnet ausgebildet, wobei eine Zahl der Magnetpole des Gebermagnets einen ganzzahligen Anteil einer Zahl von Rotormagnetpolen des Rotors bildet. Dadurch kann ein Offset, nämlich eine Winkeldifferenz zwischen einem Magnetpol eines Magnetpolpaares des Gebermagnets und einem gleichnamigen Magnetpol eines Magnetpolpaares des Rotors entlang einer Rotorumlaufrichtung des Rotors möglichst klein sein. Bevorzugt beträgt der Offset maximal den Winkel eines halben Magnetpols des Gebermagnets oder des Rotormagnets. Weiter vorteilhaft kann so die vorab erwähnte Kalibrierung entfallen, oder die vorab erwähnte Kalibrierung wird vereinfacht.

In einer bevorzugten Ausführungsform weist der Gebermagnet und der Rotor jeweils die gleiche Anzahl von Magnetpolen auf. Dadurch kann eine Winkelauflösung einer Rotorpositionsbestimmung genau sein. Weiter vorteilhaft kann der Offset zwischen einem Magnetpol eines Magnetpolpaares des Gebermagnets und einem gleichnamigen Magnetpol eines Magnetpolpaares des Rotors entlang einer Rotorumlaufrichtung des Rotors möglichst klein sein, so dass eine Rotorposition des Rotors genau bestimmt werden kann.

Bevorzugt ist der Gebermagnet mindestens mittelbar mit einer Motorwelle des Elektromotors und/oder dem Rotor des Elektromotors - insbesondere formschlüssig und/oder kraftschlüssig - drehfest verbunden. Dazu kann der Gebermagnet beispielsweise eine Nase oder eine Nut aufweisen, die ausgebildet ist, in die Motorwelle und/oder den Rotor - insbesondere in eine entsprechende Aussparung der Motorwelle und/oder des Rotors - formschlüssig einzugreifen. So kann eine Zuordnung einer Stellung des Gebermagnets zum Rotor entlang einer Rotorumlaufrichtung festgelegt sein. Die Nut oder Nase ist vorteilhaft aus nichtmagnetisierbarem Material gebildet, beispielsweise Kunststoff, insbesondere Polypropylen, Polyacryl oder ein anderer geeigneter Kunststoff. Bei einer Montage kann so die Zuordnung einfach hergestellt werden, da der Gebermagnet beispielsweise nur in einer Umfangsstellung mit dem Rotor verbunden werden kann. Denkbar ist auch eine Markierung, beispielsweise eine Kerbe in der Motorwelle, so dass der Gebermagnet - beispielsweise mit einer entsprechenden anderen Markierung versehen - eindeutig in einer bestimmten Position in Umlaufrichtung des Rotors mit dem Rotor verbunden werden kann.

Unabhängig von der Ausführungsform des Gebermagnets als mehrpoliger Permanentmagnet mit einer ganzzahligen Übereinstimmung mit den Rotormagnetpolen des Rotors - betrifft die Erfindung auch einen Elektromotor der eingangs beschriebenen Art, wobei der Elektromotor eine bevorzugt drehfeste, entlang eines Rotorumlaufes eindeutige Verbindung zwischen dem Gebermagnet und dem Rotor aufweist. Die eindeutige Verbindung weist bevorzugt ein formschlüssig eingreifendes Element, beispielsweise eine Nut oder Nase auf, welche ausgebildet ist, den Gebermagnet mindestens mittelbar mit dem Rotor - bevorzugt unmittelbar - entlang des Rotorumlaufes eindeutig drehfest zu verbinden.

Durch die Drehverbindung zwischen dem Rotor und dem Gebermagnet kann der Gebermagnet mit dem Rotor vorteilhaft mitrotieren. Die Drehverbindung zwischen dem Rotor und dem Gebermagnet ist beispielsweise durch eine Motorwelle gegeben, auf der sowohl der Rotor als auch der Gebermagnet angeordnet ist. Denkbar ist auch ein ein- oder mehrstufiges Getriebe, das den Rotor mit dem Gebermagneten drehverbindet.

Die drehfeste Verbindung zwischen dem Gebermagnet und der Motorwelle und/oder dem Rotor bewirkt, dass eine Drehbewegung des Rotors - anders als beispielsweise bei einer Drehverbindung von zwei rotierenden Elementen mittels einer Rutschkupplung - mit einer entlang eines Rotorumlaufes festen Zuordnung zur Drehbewegung des Gebermagnets erfolgt.

Erfindungsgemäß ist der Gebermagnet in einem insbesondere weichmagnetisch ausgebildeten Abschirmbecher angeordnet. Bevorzugt ist der Gebermagnet mit dem Abschirmbecher verbunden. Der Abschirmbecher weist erfindungsgemäß einen Boden und eine insbesondere zylindrisch ausgebildete Wand auf. Bevorzugt ist der Gebermagnet mit einer Innenseite der Wand des Abschirmbechers verbunden.

Weiter bevorzugt ragt der Rotorpositionssensor in den Abschirmbecher hinein. Durch den Abschirmbecher kann der Rotorpositionssensor nur das Magnetfeld des Gebermagnets empfangen und ist vor störenden Magnetfeldern, beispielsweise dem Rotormagnetfeld, einem Magnetfeld einer Leistungselektronik oder einem Magnetfeld des Stators ausreichend abgeschirmt.

Erfindungsgemäß ist der Abschirmbecher mit dem Rotor drehfest verbunden. Dadurch kann der Abschirmbecher gemeinsam mit dem Rotor rotieren.

In einer bevorzugten Ausführungsform des Elektromotors ist der Abschirmbecher mit der Motorwelle insbesondere drehfest verbunden. Der Boden des Abschirmbechers ist von dem Rotor entlang einer Motorwellenlängsachse des Elektromotors beabstandet. Weiter bevorzugt ist der Boden des Abschirmbechers von dem Rotor entlang einer Motorwellenlängsachse des Elektromotors derart beabstandet, dass ein Rotormagnetfeld des Rotors in dem Abschirmblech nicht kurzgeschlossen werden kann. Dadurch kann ein Rotormagnetfeld vorteilhaft nicht durch das Abschirmblech verlaufen und so das Magnetfeld des Gebermagnets überlagern. Weiter vorteilhaft ist dadurch eine Beeinflussung des Rotormagnetfeldes durch das Magnetfeld des Gebermagnets ausgeschlossen, so dass das Magnetfeld der Rotormagnete vollständig für einen Drehmomentaufbau genutzt werden kann.

Erfindungsgemäß sind der Rotor, insbesondere ein Rotorblechpaket des Rotors, und der Abschirmbecher jeweils entlang der Motorwellenlängsachse durch ein insbesondere einstückig ausgebildetes Distanzstück voneinander getrennt, wobei der Rotor und der Abschirmbecher jeweils - bevorzugt von der Motorwelle radial beabstandet - in das Distanzstück eingreifen, so dass der Rotor und der Abschirmbecher mittels des Distanzstücks entlang einer Drehrichtung um die Motorwellenlängsachse miteinander formschlüssig drehfest verbunden sind. Das Distanzstück ist beispielsweise aus nichtmagnetisierbarem Material, insbesondere Kunststoff gebildet. Bevorzugt weist das Distanzstück einen Durchbruch auf, durch den die Motorwelle verläuft. Dadurch ist vorteilhaft eine unmittelbar eindeutige Zuordnung entlang eines Rotorumlaufes zwischen dem Abschirmbecher - insbesondere einem mit dem Abschirmbecher verbundenen Gebermagneten - und dem Rotor gegeben. Denkbar ist auch eine - beispielsweise sich zur Motorwellenlängsachse parallel erstreckende - Nut in der Motorwelle, in die sowohl eine Nase des Abschirmbechers als auch eine Nase des Rotors eingreift. Die eindeutige Verbindung des Abschirmbechers über die Nut in der Motorwelle weist jedoch im Falle von Fertigungstoleranzen zwei Fehlerquellen auf, nämlich die der Zuordnung des Gebermagneten und/oder Abschirmbechers zur Motorwelle und die Zuordnung der Motorwelle zum Rotor.

In einer bevorzugten Ausführungsform weist der Gebermagnet in Kunststoff eingeschlossene Magnetpartikel auf. Weiter bevorzugt ist der Gebermagnet auf den Abschirmbecher, weiter bevorzugt auf eine Innenwand des Abschirmbechers, aufgespritzt. Eine permanente Magnetisierung der des Gebermagnets, insbesondere der Magnetpartikel kann vorteilhaft nach einem Aufspritzen des Gebermagnets erfolgen.

Bevorzugt ist der Gebermagnet ringförmig ausgebildet. Weiter bevorzugt sind bei dem Gebermagnet entlang eines Ringumfanges aufeinanderfolgend Magnetpolpaare mit jeweils zueinander entgegengesetzten Magnetpolen ausgebildet. Dadurch kann eine Rotorposition entlang eines Rotorumlaufes - in Abhängigkeit der Zahl der Magnetpolpaare - genau bestimmt werden.

Die Erfindung wird nun im Folgenden anhand von Figuren und weiteren Ausführungsbeispielen beschrieben. Weitere Ausführungsbeispiele ergeben sich aus den in den Figuren und der Figurenbeschreibung beschriebenen Merkmalen, sowie aus den abhängigen Ansprüchen.

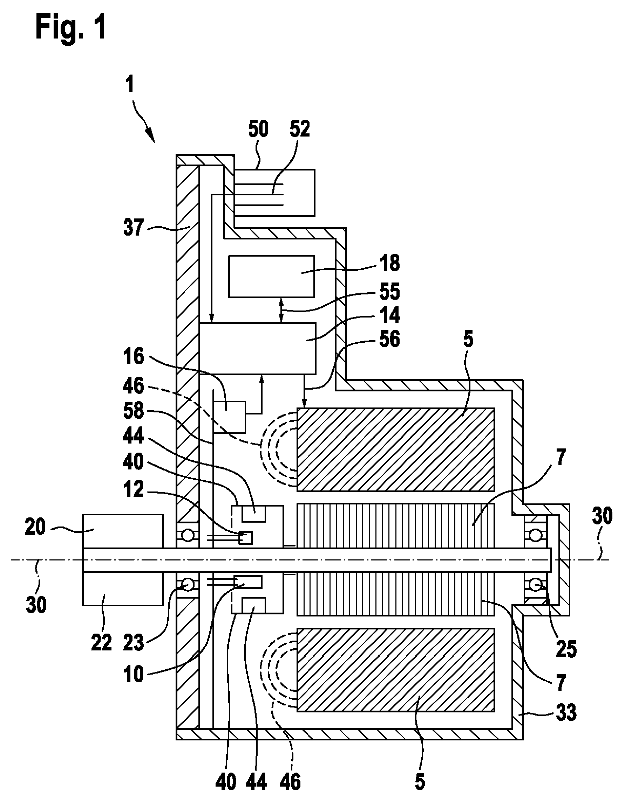

Figur 1 zeigt schematisch ein Ausführungsbeispiel für einen elektronisch kommutierten Elektromotor, bei dem ein Rotorpositionssensor durch in ein becherförmig ausgebildetes und mit einer Motorwelle drehfest verbundenes, als Abschirmbecher ausgebildetes Abschirmblech hineinragt und ein magnetisches Feld eines in dem Abschirmbecher angeordneten, mit dem Abschirmbecher mitrotierenden Gebermagnets erfassen kann und so vor magnetischen Störfeldern anderer Magnetfeldquellen geschützt ist, wobei der Rotorpositionssensor entlang einer Motorwellenlängsachse zwischen einem Rotor und einem abtriebsseitigen Ende der Motorwelle angeordnet ist;
Figur 2 zeigt schematisch den in Figur 1 dargestellten Rotor in einer Schnittdarstellung;
Figur 3 zeigt schematisch ein Ausführungsbeispiel für ein toroidhufeisenförmigen Abschirmbecher für einen Elektromotor in einer Schnittdarstellung;
Figur 4 zeigt ein Diagramm mit einer Abwicklung einer Magnetisierung eines permanentmagnetisch ausgebildeten Rotors und einer Magnetisierung eines mit dem Rotor drehverbundenen Gebermagnets relativ zueinander.
Figur 5 zeigt schematisch drei Ausführungsbeispiele für einen Rotor eines Elektromotors, beispielsweise für den in Figur 1 dargestellten Elektromotor.

Figur 1 zeigt schematisch ein Ausführungsbeispiel für einen Elektromotor 1. Der Elektromotor 1 weist einen Stator 5, einen Rotor 7, eine mit dem Rotor 7 verbundene Motorwelle 20 auf. Die Motorwelle 20 ist mittels eines Wellenlagers 23 und mittels eines Wellenlagers 25 um eine Motorwellenlängsachse 30 drehbar gelagert.

Der Elektromotor 1 weist ein - beispielsweise durch Tiefziehen hergestelltes - Gehäuse 33 auf, welches ausgebildet ist, - wie ein Topf - den Stator 5, den Rotor 7 mit der Motorwelle 20, die Lager 23 und 25, sowie weitere elektronische Komponenten, aufzunehmen.

Der Elektromotor 1 weist ein plattenförmig ausgebildetes Verschlussteil 37 auf, welches ausgebildet ist, gemeinsam mit dem Gehäuse 33 die zuvor beschriebenen Komponenten in einem von dem Gehäuse 33 umschlossenen Hohlraum einzuschließen. Das Verschlussteil 37 ist in diesem Ausführungsbeispiel wärmeleitend ausgebildet, sodass eine von einer Leistungsendstufe 14 des Elektromotors 1 erzeugte Wärme an das Verschlussteil 37 abgeführt werden kann. Das Verschlussteil 37 bildet in diesem Ausführungsbeispiel einen Anschlussflansch zum Verbinden des Elektromotors 1 mit einem Lenkgetriebe.

Die Motorwelle 20 des Elektromotors 1 weist dazu im Bereich eines Endes der Motorwelle 20 abtriebsseitig ein Antriebsrad 22 auf. Die Leistungsendstufe 14 ist ausgangsseitig über eine Verbindungsleitung 56 mit dem Stator 5, und dort mit Statorspulen des Stators 5 verbunden. Die Statorspulen des Stators 5 sind ausgebildet, im bestromten Zustand ein Magnetfeld - und auch ein störendes Magnetfeld 46 - zu erzeugen. Die Leistungsendstufe 14 ist über eine Verbindungsleitung 55 mit einem Zwischenkreiskondensator 18 verbunden.

Der Elektromotor 1 weist auch eine Steuereinheit 16 auf, welche beispielsweise mit einer Leiterplatte 58 (Printed- Circuit-Board) verbunden ist. Die Steuereinheit 16 ist eingangsseitig - über die Leiterplatte 58 - mit einem Rotorpositionssensor 10 und einem Rotorpositionssensor 12 verbunden. Der Rotorpositionssensor 10 ist wie in Figur 1 als Hall-Sensor ausgebildet, wohingegen der Rotorpositionssensor 12 als AMR-Sensor (AMR = Anisotrope-Magneto-Resistive), GMR-Sensor (GMR = Giant- Magneto-Resistive) oder TMR-Sensor (TMR = Tunnel-Magneto-Resistive) ausgebildet ist.

Der Elektromotor 1 weist auch ein mit der Motorwelle 20 verbundenes, becherförmig ausgebildetes Abschirmblech 40 auf. Das Abschirmblech 40 weist an einer Innenseite einer Becherwand des Abschirmblechs 40 einen ringförmig ausgebildeten Gebermagneten 44 auf. Der ringförmig ausgebildete Gebermagnet 44 ist beispielsweise an die Innenwand des Abschirmbleches 40 aufgespritzt und weist permanentmagnetisch ausgebildete Magnetpartikel, beispielsweise Hartferrit oder Neodym®. Der ringförmig ausgebildete Gebermagnet 44 weist beispielsweise entlang eines Ringumlaufes mehrere, jeweils aufeinander folgende Magnetpol-Paare auf. Ein formgebendes Trägermaterial des Gebermagnets ist beispielsweise Kunststoff, insbesondere ein Thermoplast wie Polypropylen, Polyvinylsulfid, oder Polyamid.

Das Abschirmblech 40 ist beispielsweise weichmagnetisch ausgebildet und umfasst dazu Eisen.

Die Rotorpositionssensoren 10 und 12 sind in diesem Ausführungsbeispiel jeweils mit der Leiterplatte 58 verbunden und sind jeweils angeordnet, in den mittels des Abschirmbleches 40 gebildeten Abschirmbecher hineinzuragen. So erreichen vorteilhaft nur die Magnetfeldlinien des ringförmig ausgebildeten Gebermagnets 44 die Rotorpositionssensoren 10 und 12. Störende Magnetfeldlinien 46, welche von dem Stator 5, stromführenden Leitungen oder dem permanentmagnetisch ausgebildeten Rotor 7 erzeugt worden sind, werden von dem Abschirmblech 40 abgeschirmt und erreichen nicht die Rotorpositionssensoren 10 und 12, da diese im Inneren des becherförmigen Abschirmblechs 40 angeordnet sind.

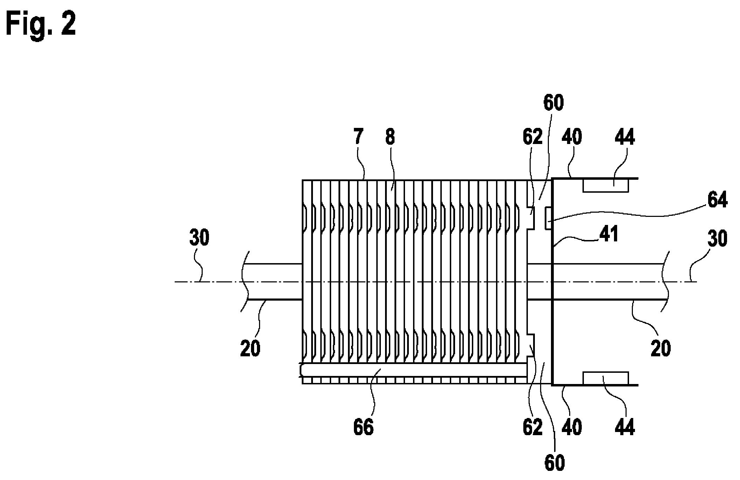

Denkbar ist auch eine Ausführung des Abschirmbleches 40 als eine Art Dose, welche im Bereich der Rotorpositionssensoren 10 und 12 jeweils einen ringförmigen Schlitz, oder eine zentrale Öffnung aufweist, durch welche die Motorwellenachse 20, und radial von der Motorwellenachse 20 beabstandet, die Rotorpositionssensoren 10 und 12 in die Dose hineinragen. Die zuvor beschriebenen Ränder der Dose sind in Figur 2 gestrichelt gekennzeichnet und erstrecken sich ausgehend von einer Zylinderwand des zuvor beschriebenen becherförmigen Abschirmblechs 40 radial nach innen zur Motorwellenlängsachse 30 hin.

Der Elektromotor 1 weist eine Anschlussbuchse 50 und Kontakte 52 auf, wobei die Kontakte 52 mit elektrischen Komponenten, beispielsweise mit der Leistungsendstufe 14 des Elektromotors 2 verbunden sind.

Figur 2 zeigt schematisch den in Figur 1 dargestellten Rotor 7 in einer Schnittdarstellung. Der Rotor 7 weist ein Blechpaket umfassend aufeinandergestapelte Einzelbleche auf, von denen das Einzelblech 8 beispielhaft bezeichnet ist. Das Blechpaket des Rotors 7 ist beispielsweise durch Stanzpaketieren hergestellt. Eine Blechebene der Einzelbleche erstreckt sich quer zur Motorwellenlängsachse 30. Die in Figur 2 abschnittsweise dargestellte Motorwelle 20 verläuft durch das den Rotor 7 bildende Blechpaket hindurch. Das Blechpaket weist parallel zur Motorwellenlängsachse 30 verlaufende und von der Motorwellenlängsachse 30 radial beabstandete und in Rotorumlaufrichtung verteilte Permanentmagnete auf, von denen der Permanentmagnet 66 dargestellt ist. Die Einzelbleche weisen jeweils aus diesen ausgeformte Nocken 62 auf, mit denen die Einzelbleche ineinander greifen, so dass eine Nocke 62 in eine rückseitig einer Nocke 62 eines benachbarten Einzelbleches sich ergebende Vertiefung eingreift. Die Nocken 62 ragen jeweils aus einer Oberfläche eines das Blechpaket abschließenden Einzelbleches heraus und erstrecken sich parallel zur Motorwellenlängsachse 30 einem Boden 42 eines Abschirmbechers 40 entgegen. Der Abschirmbecher 40 ist mit der Motorwelle 20 drehfest verbunden und dazu beispielsweise auf die Motorwelle 20 aufgepresst. Eine Bodenebene des Bodens 41 des Abschirmbechers 40 erstreckt sich quer zur Motorwellenlängsachse 30. Eine an den Boden 42 angeformte Zylinderwand des Abschirmbechers 40 erstreckt sich parallel zur Motorwellenlängsachse 30 abweisend vom Rotor 7. Der Boden 42 ist von dem das Blechpaket des Rotors 7 abschließenden Einzelblech mit den Nocken 62 entlang der Motorwellenlängsachse 30 mittels eines Distanzstücks 60 beabstandet. Das Distanzstück ist aus nichtmagnetisierbarem Material gebildet, beispielsweise Kunststoff. Die Nocken 62 greifen in entsprechende Aussparungen des Distanzstücks 60 ein. Denkbar ist auch eine Vertiefung anstelle der Nocke 62, in die das Distanzstück 60 eingreift. Aus dem Boden 42 des Abschirmbechers 40 sind wenigstens eine Nocke 64 ausgeformt, die in eine entsprechende Aussparung des Distanzstücks 60 eingreift. So kann der Abschirmbecher in einer vorbestimmten Position entlang eines Rotorumlaufes des Rotors 7 mit dem Rotor drehverbunden sein. So ist eine feste räumliche Zuordnung eines Magnetfeldes eines in dem Abschirmbecher 40 angeordneten und mit der Zylinderwand des Abschirmbechers 40 verbundenen ringförmigen Gebermagnets 44 zu einem Magnetfeld des Rotors, erzeugt durch die Permanentmagnete 66, gegeben.

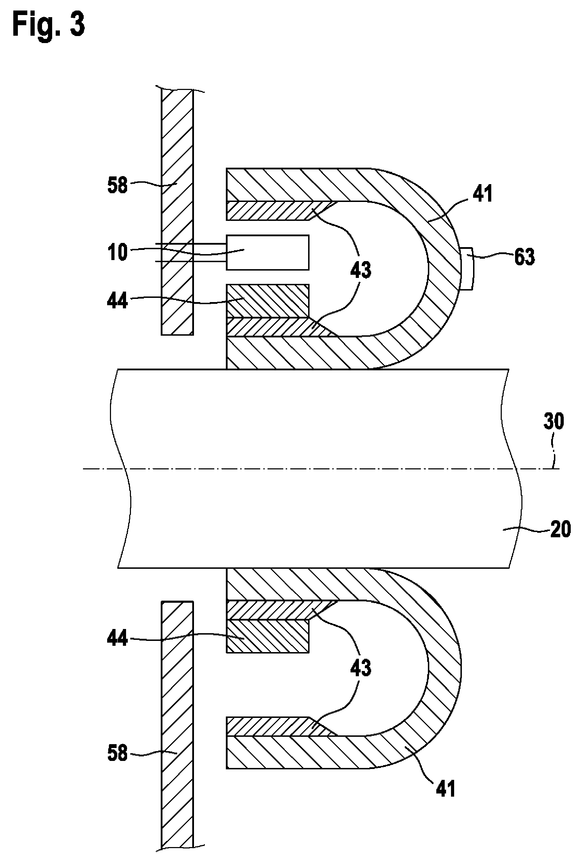

Figur 3 zeigt schematisch ein Ausführungsbeispiel für eine Variante für ein Abschirmblech 41. Das Abschirmblech 41 ist in diesem Ausführungsbeispiel wie ein Toroid ausgebildet, welcher im Vergleich zu einem Toroid keinen kreisrunden, sondern einen hufeisenförmigen Querschnitt aufweist.

Das Abschirmblech 41 ist mit der Motorwelle 20, welche in Figur 3 abschnittsweise dargestellt ist, drehfest, insbesondere formschlüssig oder kraftschlüssig verbunden. Beispielsweise ist das Abschirmblech 41 auf die Motorwelle 21 aufgepresst.

Der ringförmige Gebermagnet 44 ist in diesem Ausführungsbeispiel mittels eines Verbindungsmittels 43, beispielsweise eines Klebers oder eines Lotes, mit dem Abschirmblech 41 an einer Innenwand des Abschirmbleches 41 verbunden. Dargestellt ist auch ein Rotorpositionssensor 10, in diesem Ausführungsbeispiel ein Hall-Sensor, welcher mit einer Leiterplatte, in Figur 3 abschnittsweise dargestellt, verbunden ist, und welcher in einen von dem hufeisen-toroidförmig ausgebildeten Abschirmblech 41 umschlossenen Hohlraum hineinragt. So ist der Rotorpositionssensor 10 optimal vor magnetischen Störfeldern abgeschirmt. Der Rotorpositionssensor 10 kann in diesem Ausführungsbeispiel nur von dem ringförmig ausgebildeten Gebermagnet 44 ausgesendete Magnetfeldlinien empfangen.

Denkbar ist auch eine Ausführungsform, wobei das zuvor beschriebene Verbindungsmittel 43 selbst permanentmagnetisiert ist. So kann vorteilhaft der ringförmig ausgebildete Gebermagnet 44, welcher beispielsweise zur Herstellung der in Figur 3 gezeigten Anordnung in einem Montageschritt mit dem hufeisentoroidförmigen Abschirmblech 41 verbunden wird, entfallen.

Anstelle des Verbindungsmittels 43 kann beispielsweise ein Kunststoff in den von dem Abschirmblech 41 umschlossenen Hohlraum hineingespritzt werden, welcher magnetisierbare Partikel aufweist, und in einem weiteren Fertigungsschritt nachträglich mit einem vorbestimmten Magnetisierungsmuster permanentmagnetisch magnetisiert wird.

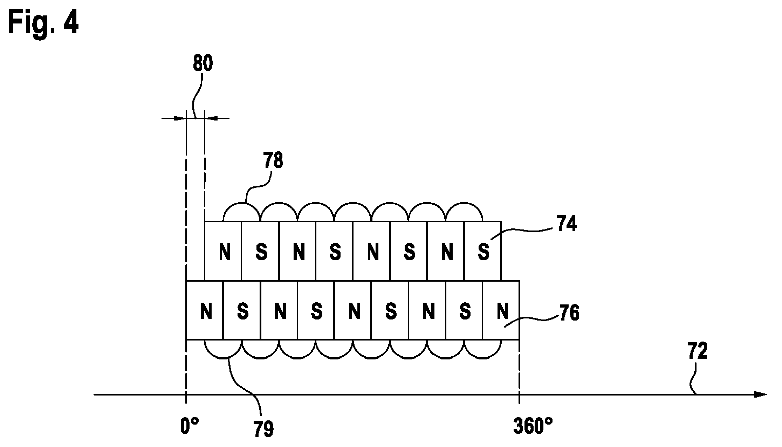

Figur 4 zeigt ein Diagramm 70 mit einer Abwicklung einer Magnetisierung eines permanentmagnetisch ausgebildeten Rotors, beispielsweise des in den Figuren 1 und 2 dargestellten Rotors 7, und einer Magnetisierung eines mit dem Rotor 7 drehverbundenen Gebermagnets relativ zueinander, jeweils in Bezug auf einen auf einer Abszisse 72 aufgetragenen Rotorumlauf von Null Grad bis 360 Grad.

In einer oberen Reihe sind Magnetpole von Magnetpolpaaren des Gebermagnets dargestellt, von denen der Magnetpol 74 beispielhaft bezeichnet ist. in einer unteren Reihe sind Magnetpole von Magnetpolpaaren des Rotors dargestellt, von denen der Magnetpol 76 beispielhaft bezeichnet ist. Die Magnetpolpaare des Gebermagnets bilden jeweils Magnetfeldlinien 78 aus. Die Magnetpolpaare des Rotors bilden jeweils Magnetfeldlinien 79 aus. In Rotorumlaufrichtung ergibt sich zwischen den Einzelmagnetpolen des Gebermagnets und den Einzelpolen des Rotors ein Offset, nämlich eine Winkeldifferenz zwischen den genannten Einzelpolen entlang einer Rotorumlaufrichtung des Rotors, also in diesem Diagramm 70 entlang der Abszisse 72. Durch eine Anzahl der Magnetpolpaare des Gebermagnets kann die Winkelauflösung der Rotorpositionserfassung bestimmt sein.

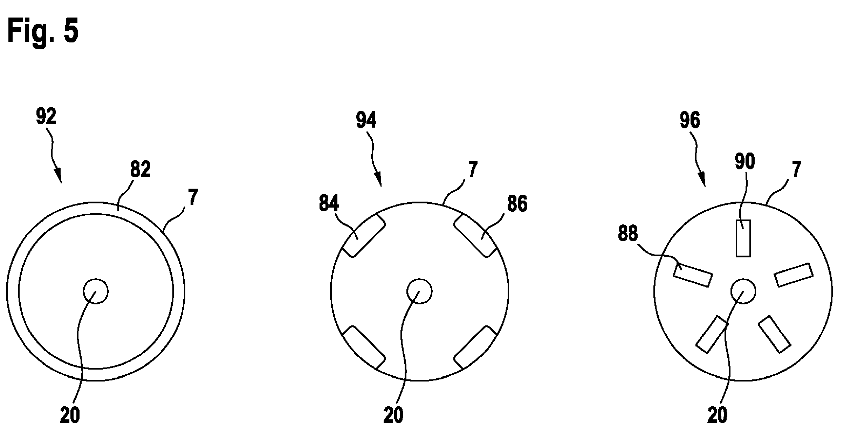

Figur 5 zeigt schematisch drei Ausführungsbeispiele für einen Rotor 7 eines Elektromotors, beispielsweise den in Figur 1 dargestellten Elektromotor 1.

Der Rotor 7 weist in einem Ausführungsbeispiel 92 einen radial von der Motorwelle 20 beabstandeten, und in Umfangsrichtung des Rotors 7 vollständig umlaufend ausgebildeten Rotormagnet 82 auf, welcher permanentmagnetisch ausgebildet ist. Der Rotormagnet kann beispielweise - wie in Figur 4 dargestellt - eine Mehrzahl von Magnetpolen wie den Magnetpol 79 aufweisen.

Dargestellt ist auch ein Ausführungsbeispiel 94 für einen Rotor 7, welcher eine Mehrzahl, in diesem Ausführungsbeispiel vier radial umlaufend gleichmäßig verteilte Rotormagnete aufweist, von denen die Rotormagnete 84 und 86 beispielhaft bezeichnet sind. Die Rotormagnete sind jeweils den Rotor 7 eingelassen und schließen jeweils mit einem äußeren Rotorumfang bündig ab.

Dargestellt ist auch ein Ausführungsbeispiel 96 für einen Rotor 7, welcher eine Mehrzahl, in diesem Ausführungsbeispiel fünf radial umlaufend gleichmäßig verteilte Rotormagnete aufweist, die jeweils radial von der Motorwelle 20 beabstandet sind und von denen die Rotormagnete 88 und 90 beispielhaft bezeichnet sind. Die Rotormagnete sind in diesem Ausführungsbeispiel mit dem Rotor verbunden und ragen jeweils von einem äußeren Rotorumfang radial nach außen.

## Patentansprüche

1. Elektronisch kommutierter Elektromotor (1),
mit einem Stator (5) und einem insbesondere permanentmagnetisch ausgebildeten Rotor (7),
und mit einem Rotorpositionssensor (10, 12), welcher ausgebildet ist, wenigstens eine Rotorposition des Rotors (7) zu erfassen und ein die Rotorposition repräsentierendes Rotorpositionssignal zu erzeugen, und mit einer mit dem Stator (5) verbundenen Steuereinheit (14, 16), welche ausgebildet ist, den Stator (5) zum Erzeugen eines magnetischen Drehfeldes in Abhängigkeit des Rotorpositionssignals zu bestromen,
wobei der Elektromotor (1) einen Gebermagnet (44) für den Rotorpositionssensor (10, 12) aufweist, wobei der Gebermagnet (44) mit dem Rotor (7) drehverbunden ist und als mehrpoliger Permanentmagnet ausgebildet ist, wobei eine Zahl der Magnetpole (74) des Gebermagnets (44) einen ganzzahligen Anteil einer Zahl von Rotormagnetpolen (76) des Rotors (7) bildet, der Elektromotor einen Abschirmbecher (40, 41) aufweist und der Gebermagnet (44) in dem Abschirmbecher (40, 41) angeordnet ist, wobei der Abschirmbecher (40, 41) einen Boden (42) und eine Wand aufweist, wobei der Abschirmbecher (40, 41) mit dem Rotor (7) drehverbunden ist,
**dadurch gekennzeichnet, dass**
der Rotor (7) und der Abschirmbecher (40, 41) jeweils entlang der Motorwellenlängsachse (30) durch ein Distanzstück (60) voneinander getrennt sind, wobei der Rotor (7) und der Abschirmbecher (40, 41) in das Distanzstück (60) eingreifen, so dass der Rotor (7) und der Abschirmbecher (40, 41) mittels des Distanzstücks (60) entlang einer Rotorumlaufrichtung um die Motorwellenlängsachse (30) miteinander formschlüssig drehfest verbunden sind.

2. Elektromotor (1) nach Anspruch 1,
**dadurch gekennzeichnet, dass**
der Gebermagnet (44) und der Rotor (7) die gleiche Zahl von Magnetpolen (74, 76) aufweist.

3. Elektromotor (1) nach Anspruch 1 oder 2,
**dadurch gekennzeichnet, dass**
der Gebermagnet (44) mindestens mittelbar mit einer Motorwelle (20) des Elektromotors (1) drehfest verbunden ist.

4. Elektromotor (1) nach einem der vorhergehenden Ansprüche,
**dadurch gekennzeichnet, dass**
das Distanzstück (60) einstückig ausgbildet ist.

5. Elektromotor (1) nach einem der vorhergehenden Ansprüche,
**dadurch gekennzeichnet, dass**
das Distanzstück (60) aus nichtmagnetisierbarem Material gebildet ist.

6. Elektromotor (1) nach einem der vorhergehenden Ansprüche,
**dadurch gekennzeichnet, dass**
das Distanzstück (60) einen Durchbruch aufweist, durch den die Motorwelle (20) verläuft.

7. Elektromotor (1) nach einem der vorhergehenden Ansprüche,
**dadurch gekennzeichnet, dass**
der Gebermagnet (44) mit einer Innenseite der Wand des Abschirmbechers (40, 41) verbunden ist.

8. Elektromotor (1) nach einem der vorhergehenden Ansprüche,
**dadurch gekennzeichnet, dass**
der Abschirmbecher (40, 41) mit der Motorwelle (20) verbunden ist und der Boden (42) des Abschirmbechers (40, 41) von dem Rotor (7) entlang einer Motorwellenlängsachse (30) derart beabstandet ist, dass ein Rotormagnetfeld des Rotors (7) in dem Abschirmbecher (40, 41) nicht kurzgeschlossen wird.

9. Elektromotor (1) nach einem der vorhergehenden Ansprüche,
**dadurch gekennzeichnet, dass**
der Gebermagnet (44) in Kunststoff eingeschlossene Magnetpartikel aufweist.

10. Elektromotor (1) nach einem der vorhergehenden Ansprüche,
**dadurch gekennzeichnet, dass**
der Gebermagnet (44) ringförmig ausgebildet ist und entlang eines Ringumfanges (72) aufeinanderfolgend Magnetpolpaare mit jeweils zueinander entgegengesetzten Magnetpolen (74) ausgebildet sind.

11. Elektromotor (1) nach einem der vorhergehenden Ansprüche,
**dadurch gekennzeichnet, dass**
der Rotor (7) und der Abschirmbecher (40, 41) jeweils von der Motorwelle radial beabstandet in das Distanzstück (60) eingreifen.

12. Elektromotor (1) nach einem der vorhergehenden Ansprüche,
**dadurch gekennzeichnet, dass**
ein Rotorblechpaket (8) des Rotors (7), und der Abschirmbecher (40, 41) jeweils entlang der Motorwellenlängsachse (30) durch das Distanzstück (60) voneinander getrennt sind.

## Claims

1. Electronically commutated electric motor (1),
having a stator (5) and a, in particular permanentmagnet, rotor (7),
and having a rotor position sensor (10, 12) which is designed to detect at least one rotor position of the rotor (7) and to generate a rotor position signal which represents the rotor position, and having a control unit (14, 16) which is connected to the stator (5) and is designed to supply current to the stator (5) in order to generate a rotating magnetic field depending on the rotor position signal,
wherein the electric motor (1) has a transmitter magnet (44) for the rotor position sensor (10, 12), wherein the transmitter magnet (44) is rotationally connected to the rotor (7) and is designed as a multi-pole permanent magnet, wherein a number of the magnet poles (74) of the transmitter magnet (44) form an integer fraction of a number of rotor magnet poles (76) of the rotor (7), the electric motor has a shielding cup (40, 41) and the transmitter magnet (44) is arranged in the shielding cup (40, 41), wherein the shielding cup (40, 41) has a base (42) and a wall, wherein the shielding cup (40, 41) is rotationally connected to the rotor (7),
**characterized in that**
the rotor (7) and the shielding cup (40, 41) are separated from one another in each case along the motor shaft longitudinal axis (30) by a spacer (60), wherein the rotor (7) and the shielding cup (40, 41) engage into the spacer (60), so that the rotor (7) and the shielding cup (40, 41) are connected to one another in an interlocking and rotationally fixed manner along a rotor rotation direction around the motor shaft longitudinal axis (30) by means of the spacer (60).

2. Electric motor (1) according to Claim 1,
**characterized in that**
the transmitter magnet (44) and the rotor (7) have the same number of magnet poles (74, 76).

3. Electric motor (1) according to Claim 1 or 2,
**characterized in that**
the transmitter magnet (44) is at least indirectly connected in a rotationally fixed manner to a motor shaft (20) of the electric motor (1).

4. Electric motor (1) according to one of the preceding claims,
**characterized in that**
the spacer (60) is of integral design.

5. Electric motor (1) according to one of the preceding claims,
**characterized in that**
the spacer (60) is formed from non-magnetizable material.

6. Electric motor (1) according to one of the preceding claims,
**characterized in that**
the spacer (60) has an aperture through which the motor shaft (20) runs.

7. Electric motor (1) according to one of the preceding claims,
**characterized in that**
the transmitter magnet (44) is connected to an inner face of the wall of the shielding cup (40, 41).

8. Electric motor (1) according to one of the preceding claims,
**characterized in that**
the shielding cup (40, 41) is connected to the motor shaft (20), and the base (42) of the shielding cup (40, 41) is at a distance from the rotor (7) along a motor shaft longitudinal axis (30) in such a way that a rotor magnetic field of the rotor (7) is not short-circuited in the shielding cup (40, 41).

9. Electric motor (1) according to one of the preceding claims,
**characterized in that**
the transmitter magnet (44) has magnetic particles which are encapsulated in plastic.

10. Electric motor (1) according to one of the preceding claims,
**characterized in that**
the transmitter magnet (44) is of annular design and pairs of magnet poles with magnet poles (74) which oppose one another in each case are formed in succession along a ring circumference (72).

11. Electric motor (1) according to one of the preceding claims,
**characterized in that**
the rotor (7) and the shielding cup (40, 41) each engage into the spacer (60) at a radial distance from the motor shaft.

12. Electric motor (1) according to one of the preceding claims,
**characterized in that**
a laminated core (8) of the rotor (7) and the shielding cup (40, 41) are in each case separated from one another along the motor shaft longitudinal axis (30) by the spacer (60).

## Revendications

1. Moteur électrique à commutation électronique (1),
comportant un stator (5) et un rotor (7) notamment réalisés sous la forme d'un aimant permanent,
et comportant un capteur de position de rotor (10, 12) qui est conçu pour détecter au moins une position de rotor du rotor (7) et pour générer un signal de position de rotor représentant la position de rotor, et comportant une unité de commande (14, 16) reliée au stator (5), qui est conçue pour alimenter en courant le stator (5) afin de générer un champ magnétique tournant en fonction du signal de position de rotor,
dans lequel le moteur électrique (1) comprend un aimant émetteur (44) destiné au capteur de position de rotor (10, 12), dans lequel l'aimant émetteur (44) est relié en rotation au rotor (7) et est réalisé sous la forme d'un aimant permanent multipolaire, dans lequel un nombre des pôles magnétiques (74) de l'aimant émetteur (44) représente une partie entière d'un nombre de pôles magnétiques de rotor (76) du rotor (7), le moteur électrique comprend une coupelle de blindage (40, 41) et l'aimant émetteur (44) est disposé dans la coupelle de blindage (40, 41), dans lequel la coupelle de blindage (40, 41) comprend un fond (42) et une paroi, dans lequel la coupelle de blindage (40, 41) est reliée en rotation au rotor (7),
**caractérisé en ce que**
le rotor (7) et la coupelle de blindage (40, 41) sont respectivement séparées l'un de l'autre le long de l'axe longitudinal (30) de l'arbre moteur par une pièce d'écartement (60), dans lequel le rotor (7) et la coupelle de blindage (40, 41) pénètrent dans la pièce d'écartement (60) de manière à ce que le rotor (7) et la coupelle de blindage (40, 41) soient reliés l'un à l'autre de manière rigide en rotation et par complémentarité de forme au moyen de la pièce d'écartement (60) dans un sens de rotation de rotor autour de l'axe longitudinal (30) de l'arbre moteur.

2. Moteur électrique (1) selon la revendication 1, **caractérisé en ce que** l'aimant émetteur (44) et le rotor (7) comprennent le même nombre de pôles magnétiques (74, 76).

3. Moteur électrique (1) selon la revendication 1 ou 2,
**caractérisé en ce que** l'aimant émetteur (44) est au moins indirectement relié de façon solidaire en rotation à un arbre moteur (20) du moteur électrique (1).

4. Moteur électrique (1) selon l'une quelconque des revendications précédentes,
**caractérisé en ce que** la pièce d'écartement (60) est réalisée en une seule pièce.

5. Moteur électrique (1) selon l'une quelconque des revendications précédentes,
**caractérisé en ce que** la pièce d'écartement (60) est constituée d'un matériau non magnétisable.

6. Moteur électrique (1) selon l'une quelconque des revendications précédentes,
**caractérisé en ce que** la pièce d'écartement (60) comprend une traversée dans laquelle passe l'arbre moteur (20).

7. Moteur électrique (1) selon l'une quelconque des revendications précédentes,
**caractérisé en ce que** l'aimant émetteur (44) est relié à une face intérieure de la paroi de la coupelle de blindage (40, 41).

8. Moteur électrique (1) selon l'une quelconque des revendications précédentes,
**caractérisé en ce que** la coupelle de blindage (40, 41) est reliée à l'arbre moteur (20) et **en ce que** le fond (42) de la coupelle de blindage (40, 41) est espacé du rotor (7) le long d'un axe longitudinal (30) de l'arbre moteur de manière à ce qu'un champ magnétique de rotor du rotor (7) ne soit pas court-circuité dans la coupelle de blindage (40, 41).

9. Moteur électrique (1) selon l'une quelconque des revendications précédentes,
**caractérisé en ce que** l'aimant émetteur (44) comprend des particules magnétiques noyées dans une matière plastique.

10. Moteur électrique (1) selon l'une quelconque des revendications précédentes,
**caractérisé en ce que** l'aimant émetteur (44) est réalisé sous forme annulaire et **en ce que** des pôles magnétiques consécutifs sont réalisés de manière à comporter respectivement des pôles magnétiques (74) opposés les uns aux autres le long d'une circonférence annulaire (72).

11. Moteur électrique (1) selon l'une quelconque des revendications précédentes,
**caractérisé en ce que** le rotor (7) et la coupelle de blindage (40, 41) pénètrent dans la pièce d'écartement (60) en étant respectivement espacés radialement de l'arbre moteur.

12. Moteur électrique (1) selon l'une quelconque des revendications précédentes,
**caractérisé en ce qu'**un empilage de tôles de rotor (8) du rotor (7) et la coupelle de blindage (40, 41) sont respectivement séparés l'un de l'autre le long de l'axe longitudinal (30) de l'arbre moteur par la pièce d'écartement (60).
